# EUROPÄISCHE PATENTSCHRIFT

(11) **EP 0 762 967 B1**
(45) Veröffentlichungstag und Bekanntmachung des Hinweises auf die Patenterteilung: **01.03.2000**
(21) Anmeldenummer: 95923290.1
(22) Anmeldetag: 09.06.1995
(51) Int. Cl.: B62L 3/02, B60T 17/04, B60D 1/62, B62L 5/00, F16D 65/24

(54) **BREMSE UND KUPPLUNG ZWISCHEN EINEM EINSPURIGEN ZUGFAHRZEUG UND EINEM EIN- ODER ZWEISPURIGEN ANHÄNGER**
BRAKE AND COUPLING BETWEEN A SINGLE-TRACK TRACTION VEHICLE AND A SINGLE OR DOUBLE-TRACK TRAILER
FREIN ET RACCORD ENTRE UN VEHICULE DE TRACTION MONOVOIE ET UNE REMORQUE MONOVOIE OU BIVOIE

(30) Priorität: 10.06.1994 DE 4420272
(43) Veröffentlichungstag der Anmeldung: 19.03.1997
(73) Patentinhaber: Donner, Wilfried, 33615 Bielefeld (DE)
(72) Erfinder: Donner, Wilfried, 33615 Bielefeld (DE)
(74) Vertreter: Hanewinkel, Lorenz, Dipl.-Phys.
(86) Internationale Anmeldenummer: EP9502240
(87) Internationale Veröffentlichungsnummer: WO9534462

(56) Entgegenhaltungen:
- DE-A- 2 951 576
- DE-A- 3 339 609
- DE-C- 809 031
- DE-C- 840 202
- DE-C- 895 110
- FR-A- 971 062
- FR-A- 1 500 819
- US-A- 2 018 845
- US-A- 2 202 070

## Beschreibung

Die Erfindung bezieht sich auf einen Anhänger zum Ankuppeln an ein einspuriges Zugfahrzeug, insbesondere an ein Fahrrad, der ein- oder zweispurig ausgebildet und mit einer eine Trommelbremse umfassenden Bremseinrichtung versehen ist, die einen außerhalb der Bremstrommel angeordneten hydraulischen Bremsbackenspreizer hat.

Im Zweiradbereich ist keine Bremse für Zweiradanhänger bekannt, welche eine sichere, vom Zugfahrzeug steuerbare Bremsung des Anhängers ermöglicht.

Der Zweiradmarkt hat gerade im Hängerbereich eine starke Vergrößerung erfahren. So werden Fahrradanhänger für den Transport von schweren Lasten, Kindern und in Ausnahmfällen sogar erwachsenen Menschen eingesetzt. Gerade beim Transport von schweren Lasten jeglicher Art ist ein sicheres Bremsen eines Zweiradanhängers geboten, da ansonsten nicht nur eine Gefährdung des Zuggespannes, sondern auch des übrigen Straßenverkehrs eintreten würde.

Sogenannte Auflaufbremsen sind nicht geeignet, ein verkehrssicheres Bremsverhalten für Zweiradanhänger zu ergeben. Insbesondere bei schwerer Belastung des Anhängers bei Talfahrt kann ein ungewolltes Bremsen verursacht werden. Bei einer Bergfahrt ist ein Bremsen des beladenen Hängers nicht möglich, da ein durch ein Auflaufen des Hängers zu aktivierender Auflaufbremsmechanismus aufgrund des Zuggewichtes des Hängers bei einer Bergfahrt nutzlos ist und mithin ein gefahrloses Absteigen auf Gefällstrecken unmöglich ist.

Aus der US 2 018 845 ist eine hydraulische Backenbremse für ein Kraftfahrzeugrad bekannt, bei der nabenfest ein hydraulischer Betätigungszylinder innerhalb zwischen den jeweils zirkular verschieblich und schwenkbar mit Rückholfedern belasteten Bremsbacken angeordnet ist, auf die über Andruckrollen endseitig Spreizbacken einwirken, die über ein schwimmendes Schwenkgelenk miteinander verbunden sind, über welches sie als Hebelarme weitergeführt sind und jeweils an einen Kolben des zweiseitig wirkenden Betätigungszylinders angelenkt sind. Somit sind zur Entkopplung der Bremsbacken von dem Betätigungszylinder in zirkularer Bewegungsrichtung ein zweiter Kolben und zahlreiche Gelenklager verwandt.

Alle handelsüblichen Trommelbremsen für Zweiräder haben als Bremsbackenspreizer einen Exzenterhebel, welcher über den Bremshebel betätigbar ist. Durch unumgehbare Fertigungstoleranzen liegen die für die bekannte Exzenterausführung erforderlichen Bohrungen für Lagerbolzen, Achse und Exzenter nicht auf einer Geraden. Hierdurch werden die Bremsbacken unterschiedlich stark gegen den Bremsring gedrückt. Die hierdurch entstehenden Differenzkräfte muß die Knebelbohrung aufnehmen, wodurch Reibungsverluste entstehen. Zudem sind die Exzenterkanten scharfkantig ausgebildet, wodurch die Spreizflächen der Bremsbacken starkem Verschleiß ausgesetzt sind, welcher kurzfristig ebenfalls zu Reibungsverlusten führt.

Die bekannten Hydraulikbremsen an Zweirädern verwenden ebenfalls die Exzenterspreizung der Bremsbacken. Eine direkte Einbringung eines "Hydraulikspreizers" zwischen die Bremsbacken ist wegen des mangelnden Einbauraumes nicht möglich.

Aufgabe der Erfindung ist es, eine hydraulisch betätigbare Bremse für Zweiradanhänger zu offenbaren, welche ein sicheres und kontrolliertes Bremsen des Zweiradanhängers durch geringere Reibungsverluste und geringeren Verschleiß erbringt.

Diese Aufgabe wird erfindungsgemäß dadurch gelöst, daß die Spreizbacken der Bremse zwischen den gespannten und einseitig angelenkten Bremsbacken frei schwimmend angeordnet sind, wobei die Spreizbacken je an einer Traverse angeordnet sind und jede Traverse einen länglichen, sich senkrecht zum jeweiligen Spreizbacken erstreckenden Mittelteil aufweist, an dessen anderen Ende ein auf der der Spreizbacke entgegengesetzten Seite senkrecht herabstehender Anschlag gebildet ist, wobei an dem Anschlag einer ersten Traverse mit einer ersten Spreizbacke ein parallel zu den Mittelteilen gerichteter, hydraulisch betätigbarer Kolben abgestützt ist, dessen Zylindergehäuse derart auf den Anschlag der zweiten Traverse wirkt, daß die zweite Traverse mit der zweiten Spreizbacke in einer Ruhestellung, in welcher die Bremsbacken die Bremstrommel federbelastet gehalten nicht berühren, zur ersten Spreizbacke in einem einstellbaren Ruhestand beabstandet ist und die erste und die zweite Traverse mit den Spreizbacken durch die Betätigung des Kolbens in eine Bremsstellung spreizbar sind.

Vorteilhafte Ausgestaltungen sind Gegenstand der Unteransprüche.

Der Bremsbackenspreizer überwindet die Nachteile der vorbekannten Spreizer. Durch die schwimmende Anordnung des Bremsbackenspreizers wird eine Abgabe der Reaktionskräfte in die Umgebungskonstruktion vermieden. Das Übersetzungsverhältnis des Backenspreizers ist variabel dimensionierbar, wodurch eine Verwendung für verschiedene Fahrzeugtypen ermöglicht wird.

Eine Nullstellung, in welcher die Bremsbacken einen Bremsring nicht kontaktieren, wird vorteilhaft durch einen Stift, Bolzen oder eine Einstellschraube eingestellt. Der Druckumsetzer ist vorteilhaft in dem Bremsbackenspreizer integriert.

Die Bremsvorrichtung ist eine Trommelbremse, welche einen hydraulischen Bremsbackenspreizer hat. Die Spreizbacken des Bremsbackenspreizers sind zwischen den gespannten und einseitig angelenkten Bremsbacken schwimmend angeordnet. Die Spreizbacken sind je an einer Traverse angeordnet. Ein hydraulisch betätigbarer Kolben ist an einer ersten Traverse mit der ersten Spreizbacke abgestützt. Die zweite Traverse ist mit der zweiten Spreizbacke in einer Ruhestellung, in welcher die Bremsbacken die Bremstrommel federbelastet gehalten nicht berühren, zur ersten Spreizbacke in einem einstellbaren Ruheabstand beabstandet. Die erste und die zweite Traverse mit den Spreizbacken sind durch die Betätigung des Kolbens in eine Bremsstellung spreizbar, wodurch die Bremsbacken gespreizt und an den in der Bremstrommel angeordneten Bremsring gedrückt sind.

Die am Anhänger angeordnete Bremse wird durch einen fahrzeugseitigen Bremshebel, welcher als Hand- oder Fußbremshebel ausbildbar ist, betätigt. Durch diese vom Zweiradfahrer kontrollierte Betätigung der Bremse ist eine sichere Bremsung des Anhängers gewährleistet.

Besonders vorteilhaft ist ein an dem Bremshebel anliegender Leitungsbetriebsdruck geringer als ein an einer Bremsvorrichtung anliegender Bremsbetriebsdruck, wobei in der Bremsvorrichtung ein Druckumsetzer integriert ist.

Dieser Druckumsetzer, welcher nachfolgend eingehend beschrieben wird, ist eine sinnvolle Ausgestaltung der hier gegenständlichen Erfindung. Der hier beschriebene Druckumsetzer wird zudem als eine eigene, selbständige Erfindung betrachtet.

Der Druckumsetzer hat zwei Druckkammern, wobei in einer ersten Druckkammer der Leitungsbetriebsdruck und in einer zweiten Druckkammer der Bremsbetriebsdruck anliegt. In der ersten Druckkammer ist ein erster Kolben, welcher diese druckfest abschließt, in Längsrichtung beweglich gehalten, an welchem ein Umsetzungskolben geringeren Durchmessers angeordnet ist.

Die Druckkammern sind durch eine gemeinsame Druckwand getrennt, in welcher eine Kolbenöffnung eingelassen ist.

Der Umsetzungskolben ist durch die Kolbenöffnung druckdicht und in Längsrichtung beweglich geführt und ragt in die zweite Druckkammer. Die zweite Druckkammer schließt einen Kolben größeren Durchmessers, welcher vorteilhaft dem Durchmesser des ersten Kolbens entspricht, in Längsrichtung beweglich druckfest ab. Dieser zweite Kolben ist mit einer Bremsbetätigungseinrichtung oder der Bremsleitung verbunden, wobei der Umsetzungskolben entsprechend der Betätigung des ersten Kolbens in die zweite Druckkammer geführt ist.

Durch diese vorteilhafte Gestaltung wird ein, im Vergleich zum üblichen Bremsleitungsdruck, erhöhter an der Bremsvorrichtung anliegender Hydraulikdruck ermöglicht. Durch diese Hydraulikdruckerhöhung wird eine entsprechende Volumen- und Hubreduzierung sowie eine Krafterhöhung erzielt.

Vorteilhaft ist der erste und/oder der zweite Kolben ein Federbalg oder ein Membrankolben.

Vorteilhaft beträgt ein Umsetzungskolbendurchmesser 5 mm bis 20 mm, vorzugsweise 8 mm bis 10 mm und ein Kolbendurchmesser 8 mm bis 40 mm, vorzugsweise 14 mm bis 16 mm.

Vorteilhaft liegt in der ersten Druckkammer ein Hydraulikdruck in Höhe von ca. 50 Bar und in der zweiten Druckkammer ein Hydraulikdruck in Höhe von 50 Bar bis 250 Bar, vorzugsweise ca. 150 Bar an.

Vorteilhaft ist der Druckumsetzer in der Bremsvorrichtung angeordnet. Durch diese Anordnung wird der Hydraulikdruck unmittelbar vor der Bremse erhöht, wodurch die Bremsleitung lediglich dem geringen Innendruck in Höhe von ca. 50 Bar ausgesetzt ist.

In einer vorteilhaften Ausbildung der Bremse beträgt der Hydraulikinnendruck in der gesamten Bremsleitung ca. 150 Bar. Der Bremshebel ist in seinen Parametern, Hydraulikkolben-durchmesser und Hebelübersetzung entsprechend ausgestaltet.

In einer vorteilhaften Ausführung des Bremsbackenspreizers weist der an der ersten Traverse angeordnete Kolben endig einen konisch angeschrägten Schubkeil auf, dessen erste Keilfläche sich an der die erste Spreizbacke führenden ersten Traverse abstützt. Die erste Traverse hat einen gegenläufig angeschrägten ersten Druckaufnahmekeil mit einer ersten Abstützfläche. Die zweite Keilfläche des Schubkeiles liegt an der die zweite Spreizbacke tragende zweiten Traverse, welche einen gegenläufig angeschrägten zweiten Druckaufnahmekeil mit einer zweiten Abstützfläche hat, an. Die Spreizbacken sind federbelastet in der Ruhestellung gehalten.

Durch ein Verschieben des Kolbens mit dem Schubkeil werden die Traversen und mithin die Spreizbacken gegeneinander verschoben, wodurch eine Spreizung der Bremsbacken erfolgt.

Die erste Traverse ist vorzugsweise rohrförmig mit einem Innendurchmesser von 10 mm bis 20 mm, vorzugsweise 14 mm ausgebildet. Die zweite Traverse ist eine in dem Rohr verschiebbar geführte Stange mit einem Durchmesser von 6 mm bis 18 mm, vorzugsweise 10 mm.

Die Druckaufnahmekeile sind vorteilhaft mit Gelenkverbindungen an einem Hydraulikzylinder gehalten und mit dem Schubkeil in einem an dem Rohr angeformten Gehäuse eingesetzt.

Vorteilhaft ist ein Abstützabstand der ersten Abstützfläche zur ersten Traverse und somit mittelbar der Abstand der Bremsbacken zum Bremsring, z.B. durch eine Einstellschraube verstellbar, wobei die Einstellschraube in dem Gehäuse verstellbar gehalten ist.

In einer alternativen Gestaltung des Kolbens mit Keil ist der Keil als Zugkeil ausgebildet, wobei der Zugkeil durch den Kolben gezogen wird.

Der Bremsbackenspreizer gewährleistet eine verschleißarme Verwendung von Trommelbremsen bei sicherer Bremskraft. Die verwendeten Bauteile der betätigenden Teile von Trommelbremsen sind bereits handelsüblich oder kostengünstig herzustellen.

Die Erfindung wird nachfolgend anhand von Ausführungsbeispielen in den Fig. 1 bis Fig. 5 erläutert:
- Fig. 1: zeigt einen Querschnitt des Backenspreizers mit integriertem Druckumsetzer;
- Fig. 2: zeigt einen Querschnitt des Backenspreizers mit Schubkeil,
- Fig. 3: zeigt einen Schnitt durch die einer Trommelbremse zugeordneten Bremse,
- Fig. 4: zeigt eine Stirnansicht der Trommelbremse mit Bremse,
- Fig. 5: zeigt einen Schnitt durch die einer Trommelbremse zugeordneten Bremse in weiterer Ausführung.

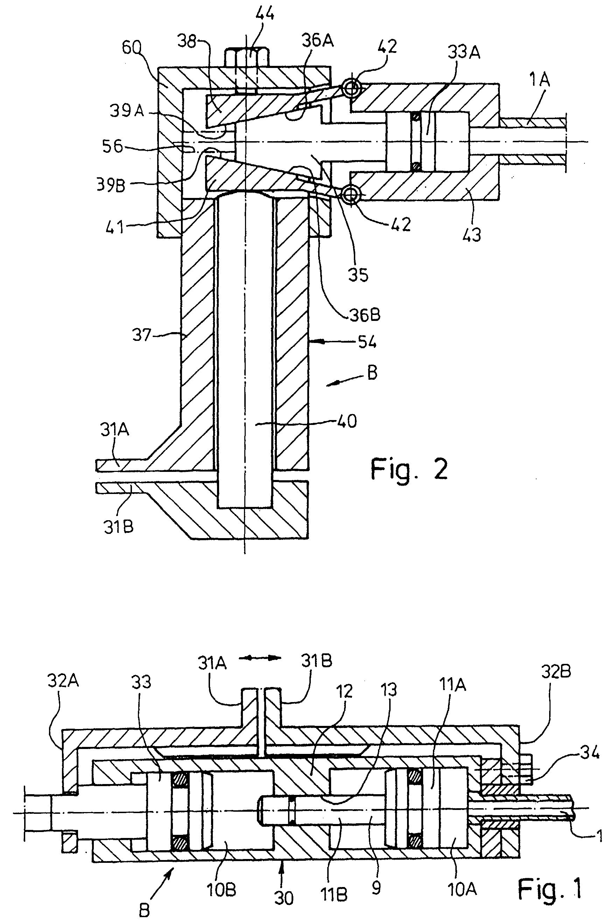

Figur 1 zeigt einen Querschnitt des Backenspreizers (30) mit integriertem Druckumsetzer (9). Der dargestellte Backenspreizer (30) ist für eine Trommelbremse (71) vorgesehenen. Die Spreizbacken (31A, 31B) sind zwischen den gespannten und einseitig angelenkten Bremsbacken (72) einer Trommelbremse (71) schwimmend angeordnet.

Die Spreizbacken (31A, 31B) sind je an einer Traverse (32A, 32B) angeordnet. Ein hydraulisch betätigbarer Kolben (33) ist an einer ersten Traverse (32A) mit der ersten Spreizbacke (31A) abgestützt. Die zweite Traverse (32B) ist mit der zweiten Spreizbacke (31B) in einer Ruhestellung, in welcher die Bremsbacken die Bremstrommel federbelastet gehalten nicht berühren, zur ersten Spreizbacke (31A) in einem einstellbaren Ruheabstand beabstandet.

Die erste und die zweite Traverse (32A, 32B) sind mit den Spreizbacken (31A, 31B) durch die Betätigung des Kolbens (33) in eine Bremsstellung spreizbar. Die Nullstellung der Spreizbacken (31A, 31B), in welcher diese so eingestellt sind, daß die Bremsbacken (72) den Bremsring nicht berühren, ist durch einen Stift oder Bolzen einstellbar. Durch eine Einstellschraube (34) ist der Backenspreizer (30) nachstellbar. Der Backenspreizer (30) stützt sich montiert an dem Trommelbremsgehäuse ab und nimmt so außerhalb der mit einem Doppelpfeil angedeuteten Wirklinie entstehende Querkräfte auf. Der Druckumsetzer (9) ist in dem Bremsbackenspreizer (30) integriert.

Ein in der Bremsleitung (1) anliegender Leitungsbetriebsdruck ist geringer ist als ein an einer Bremsvorrichtung (30) anliegender Bremsbetriebsdruck.

Das Druckverhältnis wird durch den Druckumsetzer (9) kontrolliert.

Der Druckumsetzer (9) hat zwei Druckkammern (10A, 10B). In einer ersten Druckkammer (10A) liegt bei einer Bremsbetätigung ein Leitungsbetriebsdruck und in einer zweiten Druckkammer (10B) ein Bremsbetriebsdruck an. In der ersten Druckkammer (10A) ist ein erster Kolben (11A), welcher die erste Druckkammer (10A) druckfest abschließt, in Längsrichtung beweglich gehalten, an welchem ein Umsetzungskolben (11B) geringeren Durchmessers angeordnet ist. Der Umsetzungskolben (11B) ist durch eine in die zwei Druckkammern (10A, 10B) trennende Druckwand (12) eingelassene Kolbenöffnung (13) druckdicht und in Längsrichtung beweglich geführt und ragt in die zweite Druckkammer (10B).

Die zweite Druckkammer (10B) schließt der Kolben (33) mit einem größeren Durchmesser, welcher vorteilhaft dem Durchmesser des ersten Kolbens (11A) entspricht, in Längsrichtung beweglich druckfest ab. Der zweite Kolben (33) ist mit der ersten Traverse (32A) verbunden. Der Umsetzungskolben (11B) ist entsprechend der Betätigung des ersten Kolbens (11A) in die zweite Druckkammer (10B) geführt, wodurch der zweite Kolben (33) entsprechend verdrängt wird und die erste Traverse (32A) betätigt. Der Umsetzungskolbendurchmesser beträgt erfindungsgemäß 5 mm bis 20 mm, vorzugsweise 8 mm bis 10 mm und ein Kolbendurchmesser beträgt 8 mm bis 40 mm, vorzugsweise 14 mm bis 16 mm.

In der ersten Druckkammer (10A) liegt bei einer Bremsbetätigung ein Hydraulikdruck in Höhe von 10 bis 50 Bar an und in der zweiten Druckkammer (10B) liegt entsprechend ein Hydraulikdruck in Höhe von 50 Bar bis 250 Bar, vorzugsweise ca. 150 Bar an.

In dieser Darstellung wird deutlich, daß die Spreizbacken (31A, 31B) einfach zwischen die Bremsbacken verbringbar sind und der Backenspreizer (30) außerhalb des Bremsgehäuses montierbar ist. Zweckmäßig wird der Backenspreizer (30) in ein Zusatzgehäuse in Längsrichtung frei verschiebbar (schwimmend) verbracht.

Figur 2 zeigt einen Querschnitt des Backenspreizers (54) mit Schubkeil (35). Der Backenspreizer (54) hat einen hydraulisch betätigbaren Kolben (33A), welcher endig einen konisch angeschrägten Schubkeil (35) aufweist. Die erste Keilfläche (36A) des Schubkeiles (35) stützt sich an der ersten Traverse (37) mit der ersten Spreizbacke (31A) ab. Diese erste Traverse (37) hat einen gegenläufig angeschrägten ersten Druckaufnahmekeil (38) mit einer ersten Abstützfläche (39A), an welcher der Schubkeil (35) anliegt.

Die zweite Keilfläche (36B) des Schubkeiles (35) liegt an der die zweite Spreizbacke (31B) tragenden zweiten Traverse (40), welche einen gegenläufig angeschrägten zweiten Druckaufnahmekeil (41) mit einer zweiten Abstützfläche (39B) hat, an. Die die Spreizbacken (31A, 31B) sind federbelastet in der Ruhestellung gehalten. Die erste Traverse (37) ist rohrförmig mit einem Innendurchmesser von 10 mm bis 20 mm, vorzugsweise 14 mm ausgebildet. Die zweite Traverse (40) ist eine in dem Rohr (37) frei verschiebbar geführte Stange (40) mit einem Durchmesser von 6 mm bis 18 mm, vorzugsweise 10 mm. Die Druckaufnahmekeile (38, 41) sind mit Gelenkverbindungen (42) an einem Hydraulikzylinder (43) gehalten und mit dem Schubkeil (35) in einem an dem Rohr (37) angeformten Gehäuse (60) eingesetzt. Ein Abstützabstand der ersten Abstützfläche (39) zur ersten Traverse (37) ist durch eine in dem Gehäuse (60) verstellbar gehaltenen Einstellschraube (44) justierbar. Durch die hydraulisch betätigte Bewegung des Schubkeiles (35) in Pfeilrichtung werden die Traversen (37, 40) auseinandergeschoben und mithin die Spreizbacken (31A, 31B) gespreizt, wodurch die Bremsbacken an den Bremsring gedrückt werden. Eine Rückholfeder (56) schiebt den Schubkeil (35) bei Lösung des Bremshebels in die Ruhestellung und die Bremsbacken werden gelöst und entspannt.

In Fig. 2 ist die Traverse (37) um 90° um die Längsachse der zweiten Traverse (40) verdreht dargestellt.

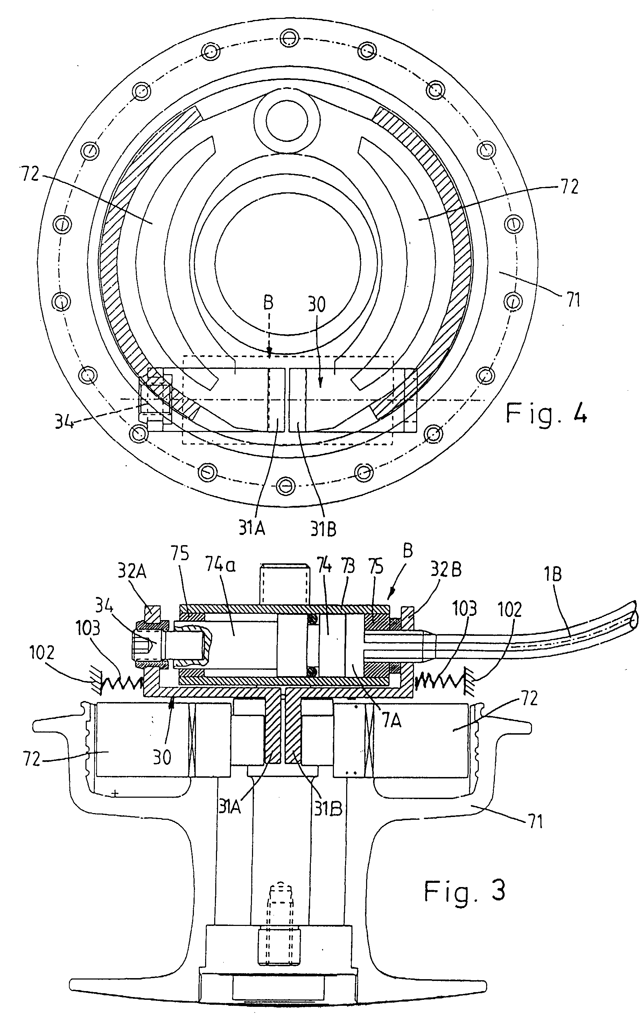

Nunmehr wird Bezug genommen auf die Ausführungen nach Fig. 3 bis 5, wobei für gleiche Bau- und Funktionsteile die gleichen Bezugszahlen verwendet worden sind.

In Fig. 3 ist die freischwimmende Halterung der Bremse (B) an einem Anhänger-Lagerteil (102) mittels beidseitiger Federelemente (103) gezeigt.

Gemäß Fig. 3 weist die Bremse (B) in einem beidendseitig durch Stirnwände (75) abgeschlossenen Gehäuse (73) einen abgedichtet verschiebbaren Kolben (74) auf, und das Gehäuse (73) bildet zwischen Kolben (74) und der mit der Bremsleitung (1B) verbundenen Stirnwand (75) eine Druckkammer (7A). Die Kolbenstange (74a) ist aus der anderen Stirnwand (75) herausgeführt und durch einen stirnseitig in die Kolbenstange (74a) eingreifenden, in einer Traverse (32a) des Backenspreizers (30) gehaltenen Schraubbolzen (34) in der Hubgröße einstellbar bzw. nachstellbar.

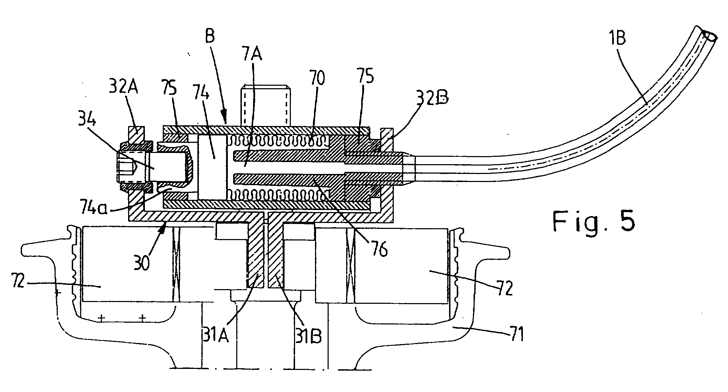

Die Bremse nach nach Fig. 5 hat in einem beidendseitig durch Stirnwände (75) abgeschlossenen Gehäuse (73) einen abgedichtet verschiebbaren Kolben (74) und einen die Druckkammer (7A) bildenden Federbalg (70).

Der Federbalg (70) ist einenends an einem mit der Bremsleitung (1B) verbundenen hohlen Führungskörper (76) und anderenends an dem Kolben (74) abgestützt.

Die Kolbenstange (74a) ist ebenfalls aus der anderen Stirnwand (75) herausgeführt und durch einen stirnseitig in die Kolbenstange (74a) eingreifenden, in einer Traverse (32a) des Backenspreizers (30) gehaltenen Schraubbolzen (34) in der Hubgröße einstellbar und nachstellbar.

## Patentansprüche

1. Anhänger zum Ankuppeln an ein einspuriges Zugfahrzeug, insbesondere an ein Fahrrad, der ein- oder zweispurig ausgebildet und mit einer eine Trommelbremse (71) umfassenden Bremseinrichtung versehen ist, die einen außerhalb der Bremstrommel angeordneten hydraulischen Bremsbackenspreizer (30) hat, dadurch gekennzeichnet, daß dessen Spreizbacken (31A, 31B) zwischen den gespannten und einseitig angelenkten Bremsbacken (72) frei schwimmend angeordnet sind, wobei die Spreizbacken (31A, 31B) je an einer Traverse (32A, 32B) angeordnet sind und jede Traverse (32A, 32B) einen länglichen, sich senkrecht zum jeweiligen Spreizbacken (31A, 31B) erstreckenden Mittelteil aufweist, an dessen anderen Ende ein auf der der Spreizbacke entgegengesetzten Seite senkrecht herabstehender Anschlag gebildet ist, wobei an dem Anschlag einer ersten Traverse (32A) mit einer ersten Spreizbacke (31A) ein parallel zu den Mittelteilen gerichteter, hydraulisch betätigbarer Kolben (33) abgestützt ist, dessen Zylindergehäuse derart auf den Anschlag der zweiten Traverse (32B) wirkt, daß die zweite Traverse (32B) mit der zweiten Spreizbacke (31B) in einer Ruhestellung, in welcher die Bremsbacken (72) die Bremstrommel (71) federbelastet gehalten nicht berühren, zur ersten Spreizbacke (31A) in einem einstellbaren Ruhestand beabstandet ist und die erste und die zweite Traverse (32A, 32B) mit den Spreizbacken (31A, 31B) durch die Betätigung des Kolbens (33A) in eine Bremsstellung spreizbar sind.

2. Anhänger nach Anspruch 1, dadurch gekennzeichnet, daß eine Nullstellung, in welcher die Bremsbacken (72) den Bremsring der Trommelbremse (71) nicht kontaktieren, durch einen Stift, Bolzen oder eine Einstellschraube (34) einstellbar ist.

3. Anhänger nach Anspruch 1 oder 2, dadurch gekennzeichnet, daß der Kolben (33A) endig einen konisch angeschrägten Schubkeil (35) aufweist, dessen erste Keilfläche (36A) sich an der ersten Traverse (37) mit der ersten Spreizbacke (31A) abstützt, wobei die erste Traverse (37) einen gegenläufig angeschrägten ersten Druckaufnahmekeil (38) mit einer ersten Abstützfläche (39A) hat, und dessen zweite Keilfläche (36B) an der die zweite Spreizbacke (31B) tragende zweiten Traverse (40), welche einen gegenläufig angeschrägten zweiten Druckaufnahmekeil (41) mit einer zweiten Abstützfläche (39A) hat, anliegt, und daß die Spreizbacken (31A, 31B) federbelastet in der Ruhestellung gehalten sind.

4. Anhänger nach einem der Ansprüche 1 bis 3, dadurch gekennzeichnet, daß die erste Traverse (37) rohrförmig mit einem Innendurchmesser von 10 mm bis 20 mm, vorzugsweise 14 mm, ausgebildet ist und die zweite Traverse (40) eine in dem Rohr (37) frei verschiebbar geführte Stange (40) mit einem Durchmesser von 6 mm bis 8 mm, vorzugsweise 10 mm, ist.

5. Anhänger nach einem der Ansprüche 1 bis 4, dadurch gekennzeichnet, daß die Druckaufnahmekeile (38, 41) mit Gelenkverbindungen (42) an einem Hydraulikzylinder (43) gehalten sind und mit dem Schubkeil (35) in einem an dem Rohr (37) angeformten Gehäuse (60) eingesetzt sind.

6. Anhänger nach einem der Ansprüche 1 bis 5, dadurch gekennzeichnet, daß ein Abstützabstand der ersten Abstützfläche (39) zur ersten Traverse (37) z. B. durch eine Einstellschraube (4) verstellbar ist, wobei die Einstellschraube (44) in dem Gehäuse (60) verstellbar gehalten ist.

7. Anhänger nach einem der Ansprüche 1 bis 6, dadurch gekennzeichnet, daß derselbe in einem beidendseitig durch Stirnwände (75) abgeschlossenen Gehäuse (73) einen abgedichtet verschiebbaren Kolben (74) aufweist,
das Gehäuse (73) zwischen Kolben (74) und der mit der Bremsleitung (1B) verbundenen Stirnwand (75) eine Druckkammer (7A) bildet und
die Kolbenstange (74a) aus der anderen Stirnwand (75) herausgeführt ist und durch einen stirnseitig in die Kolbenstange (74a) eingreifenden, in einer Traverse (32A) des Backenspreizers (30) gehaltenen Schraubbolzen (34) in der Hubgröße einstellbar ist.

8. Anhänger nach einem der Ansprüche 1 bis 6, dadurch gekennzeichnet, daß derselbe in einem beidendseitig durch Stirnwände (75) abgeschlossenen Gehäuse (73) einen abgedichtet verschiebbaren Kolben (74) und einen die Druckkammer (7A) bildenden Federbalg (70) aufweist, der einenends an einem mit der Bremsleitung (1B) verbundenen hohlen Führungskörper (76) und anderenends an dem Kolben (74) abgestützt ist
und
die Kolbenstange (74a) aus der anderen Stirnwand (75) herausgeführt ist und durch einen stirnseitig in die Kolbenstange (74a) eingreifenden, in einer Traverse (32a) des Backenspreizers (30) gehaltenen Schraubbolzen (34) in der Hubgröße einstellbar ist.

## Claims

1. Trailer for coupling onto a single-track towing vehicle, in particular a bicycle, which [trailer] is designed to be single-track or double-track and is equipped with a braking device which includes a drum brake (71) and which has a hydraulic brake block expander (30) arranged outside the drum brake,
**characterised in that**
its expander jaws (31A, 31B) are arranged free-floating between the tensioned brake jaws (72) which are operated on one side, with the expander jaws (31A, 31B) each being arranged on a traversing member (32A, 32B), and each traversing member (32A, 32B) having a long centre part extending perpendicular to the respective expander jaw (31A, 31B), on the other end of which is formed a limit stop which extends down perpendicular on the side opposite the expander jaw, with a hydraulically operated piston (33), which is aligned parallel to the centre parts, being supported on the limit stop of a first traversing member (32A) with a first expander jaw (31A), the cylinder housing of this piston acting on the limit stop of the second traversing member (32B) in such a way that the second traversing member (32B) with the second expander jaw (31B), in a resting position in which the brake blocks (72) - held under spring tension - do not touch the brake drum (71), is distanced from the first expander jaw (31A)in an adjustable at-rest state, and the first and second traversing member (32A, 32B) with the expander jaws (31A, 31B) can be expanded by actuation of the piston (33A) into a braking position.

2. Trailer in accordance with claim 1, characterised in that a zero position, in which the brake jaws (72) do not contact the brake surface of the brake drum (71), can be set by means of a pin, bolt or adjusting screw (34).

3. Trailer in accordance with claim 1 or 2, characterised in that the piston (33A) has at the end a conically tapered thrust wedge (35), whose first wedge face (36A) rests against the first traversing member (37) with the first expander jaw (31A), with the first traversing member (37) having a first pressure-pad wedge (38), tapered in the opposite manner, with a first support surface (39A), and whose second wedge face (36B) rests against the second traversing member (40), which carries the second expander jaw (31B), and which has a second pressure-pad wedge (41), tapered in the opposite manner, with a second support surface (39A), and that the expander jaws (31A, 31B) are held, spring-loaded, in the resting position.

4. Trailer in accordance with one of the claims 1 to 3, characterised in that the first traversing member (37) is designed in the form of a tube with an internal diameter of 10 mm to 20 mm, preferably 14 mm, and the second traversing member (40) is a rod (40), which is held so as to be freely movable in the tube (37), with a diameter of 6 mm to 8 mm, preferably 10 mm.

5. Trailer in accordance with one of the claims 1 to 4, characterised in that the pressure-pad wedges (38, 41) are secured to a hydraulic cylinder (43) by means of pivoted joints (42), and that with the thrust wedge (35)they are deployed in a housing (60) formed on the tube (37).

6. Trailer in accordance with one of the claims 1 to 5, characterised in that the support distance of the first support face (39) to the first traversing member (37) is adjustable by means of - for example - an adjusting screw (4) [*sic*], with the adjusting screw (44) being adjustably held in the housing (60).

7. Trailer in accordance with one of the claims 1 to 6, characterised in that in a housing (73), sealed off on both ends by frontal walls (75), this trailer has a piston (74) which is displaceable in a sealed state;
the housing (73) forms a pressure chamber (7A) between the piston (74) and the frontal wall (75) connected with the brake pipe (1B);
the piston rod (74a) is led out from the other frontal wall (75), and the stroke length can be set by means of a screw bolt (34) which on the frontal face engages into the piston rod (74a) and is held in a traversing member (32A) ofthe jaw expander (30).

8. Trailer in accordance with one of the claims 1 to 6, characterised in that in a housing (73), sealed off on both ends by frontal walls (75), this trailer has a piston (74) which is displaceable in a sealed state, and a spring bellows (70) which forms the pressure chamber (7A) and which on one end rests against a hollow guide body (76) which is connected to the brake pipe (1B), and on the other end rests on the piston (74),
and
the piston rod (74a) is led out from the other frontal wall (75), and the stroke length can be set by means of a screw bolt (34) which on the frontal face engages into the piston rod (74a) and is held in a traversing member (32A) of the jaw expander (30).

## Revendications

1. Remorque monovoie ou bivoie destinée à être attelée à un véhicule de traction monovoie, notamment à une bicyclette, et pourvue d'un dispositif de freinage (71) qui comprend un frein à tambour et un écarteur hydraulique des segments de frein (30) disposé en dehors du tambour,
caractérisé en ce que
les mâchoires (31A, 31B) de l'écarteur sont disposées, flottant librement, entre les segments de frein (72) tendus et articulés monolatéralement, ces mâchoires (31A, 31B) étant placées, chacune, sur une traverse (32A, 32B) et chaque traverse (32A, 32B) présentant une pièce centrale perpendiculaire à la mâchoire correspondante (31A, 31B) à l'autre extrémité de laquelle une butée est formée en saillie verticale du côté opposé à la mâchoire et un piston hydraulique (33), parallèle aux pièces centrales (33), prenant appui sur la butée d'une première traverse (32A) d'une première mâchoire d'écartement (31A), piston (33) dont le cylindre agit sur la butée de la deuxième traverse (32B) de sorte que la deuxième traverse (32B), se trouvant en une position de repos dans laquelle les segments de frein (72), maintenus équilibrés par ressort, ne contactent pas le tambour de frein (71), soit maintenue à distance de la première mâchoire (31A), dans un état de repos réglable, avec la deuxième mâchoire (31B) et la première et la deuxième traverses (32A, 32B), avec les mâchoires d'écartement (31A, 31B), pouvant être écartées en position de freinage par actionnement du piston (33A).

2. Remorque selon la revendication 1,
caractérisée en ce que
une position zéro, dans laquelle les segments de frein (72) ne contactent pas la jante de freinage du frein à tambour (71), peut être réglée à l'aide d'une tige, d'un boulon ou d'une vis de réglage (34).

3. Remorque selon la revendication 1 ou 2,
caractérisée en ce que
le piston (33A) présente, à son extrémité, un cône de poussée (35) dont une première surface (36A) prend appui sur la première traverse (37) avec la première mâchoire d'écartement (31A), la première traverse (37) étant pourvue d'une première cale d'absorption de pression (38)biseautée dans le sens opposé, laquelle présente une première surface d'appui (39A) et dont la deuxième surface (36B), contre laquelle s'appuie la deuxième traverse (40) qui porte la deuxième mâchoire d'écartement (31B) et présente une deuxième cale d'absorption de pression (41) biseautée dans le sens opposé et pourvue d'une deuxième surface d'appui (39A) et
les mâchoires d'écartement (31A, 31B) sont maintenues en position de repos, équilibrées par ressort.

4. Remorque selon l'une des revendications 1 à 3,
caractérisée en ce que
la première traverse (37) est conçue en forme de tube de 10 mm à 20 mm de diamètre intérieur, de préférence 14 mm, et
que la deuxième traverse (40) est une tige (40) conduite, librement déplaçable, dans le tube (37) et présentant un diamètre de 6 mm à 8 mm, de préférence 10 mm.

5. Remorque selon l'une des revendications 1 à 4,
caractérisée en ce que
les cales d'absorption de pression (38, 41) sont reliées à un vérin hydraulique (43) par des articulation (42) et insérées, avec le cône de poussée (35), dans le boîtier (60) qui est formé à partir du tube (37).

6. Remorque selon l'une des revendications 1 à 5,
caractérisée en ce que
un intervalle peut être réglé entre la première surface d'appui (39) et que la première traverse (37) peut être réglée, par exemple, à l'aide d'une vis de réglage (44) qui est maintenue, ajustable, dans le boîtier (60).

7. Remorque selon l'une des revendications 1 à 6,
caractérisée en ce que
celle-ci présente un piston déplaçable de façon étanche dans un boîtier (73) fermé des deux côtés par des parois frontales (75),
le boîtier (73) forme une chambre de compression (7A) entre le piston (74) et la paroi frontale (75) qui est reliée à la conduite (1B) du frein et
que la tige (74a) du piston traverse l'autre paroi frontale (75) et que la grandeur de course peut être réglée à l'aide d'un boulon fileté (34) qui mord frontalement dans la tige de piston (74a) et est maintenu dans une traverse (32A) de l'écarteur à mâchoires (30).

8. Remorque selon l'une des revendications 1 à 6,
caractérisé en ce que
celle-ci présente un piston (74), déplaçable, de façon étanche, dans un boîtier (73) fermé des deux côtés par des parois frontales (75) et un soufflet à ressort (70) qui forme la chambre de compression (7A), ce soufflet (70) prenant appui, par l'une de ses extrémités, sur une pièce de guidage (76) qui est reliée à la conduite de frein (1b) et, par son autre extrémité, sur le piston (74)
et
que la tige de piston (74a) traverse l'autre paroi frontale (75) et que sa course peut être réglée à l'aide d'un boulon fileté (34) qui mord, frontalement, dans la tige de piston (74a) et est maintenu dans une traverse (32a) de l'écarteur à mâchoire (30).
